(19) Europäisches Patentamt
European Patent Office
Office européen des brevets

(11) Veröffentlichungsnummer: **0 103 731**
**B1**

(12) # EUROPÄISCHE PATENTSCHRIFT

(45) Veröffentlichungstag der Patentschrift: **08.10.86**

(51) Int. Cl.⁴: **C 08 G 63/68**

(21) Anmeldenummer: **83107841.5**

(22) Anmeldetag: **09.08.83**

(54) **Phosphorhaltige Polyarylenester und Verfahren zu ihrer Herstellung.**

(30) Priorität: **24.08.82 DE 3231331**

(43) Veröffentlichungstag der Anmeldung: **28.03.84 Patentblatt 84/13**

(45) Bekanntmachung des Hinweises auf die Patenterteilung: **08.10.86 Patentblatt 86/41**

(84) Benannte Vertragsstaaten: **DE FR GB IT NL**

(56) Entgegenhaltungen:
**US - A - 2 646 420**
**US - A - 4 127 566**

(73) Patentinhaber: **Röhm GmbH, Kirschenallee Postfach 4242, D-6100 Darmstadt 1 (DE)**

(72) Erfinder: **Besecke, Siegmund, Dr., Auf dem Kreuzberg 6, D-6104 Seeheim-Jugenheim (DE)**
Erfinder: **Schröder, Günter, Dr., Leipziger Strasse 7, D-6105 Ober-Ramstadt (DE)**
Erfinder: **Ude, Werner, Dr., Falkenstrasse 10, D-6100 Darmstadt-Arheilgen (DE)**
Erfinder: **Wunderlich, Winfried, Dr., Spessartring 11, D-6101 Rossdorf (DE)**

EP 0 103 731 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft phosphorhaltige Polyarylenester, die als hoch temperaturbeständige und schwerbrennbare thermoplastische Kunststoffe von Interesse sind.

Aus der DE-OS 2925206 sind Polyesterphosphonate bekannt, die hinsichtlich ihrer Eigenschaften zur gleichen Kunststoffklasse gehören. Sie sind jedoch durch den Gehalt an Phosphonestergruppen verhältnismässig leicht hydrolytisch spaltbar.

Phosphorhaltige Polyarylenester sind in JP-OS 8165020 und in einer Arbeit von H. Kondo et. al. (European Polymer Journal, Vol. 17, 1981, S.583–588) beschrieben. Sie enthalten die Phosphoratome in 5- oder 6-gliedrigen Ringstrukturen, die als Polymermolekül stark versteifen. Dies führt zu hohen Erweichungstemperaturen, die die Verarbeitung nahe an der Zersetzungstemperatur erforderlich machen.

S. Hashimoto et. al. (Kobunshi Kagaku, Eng. Ed., Vol. 2, Nr. 9, 1973, S.826–834) haben phosphorhaltige Polyarylenester der Struktur

$$-[O-A-O-CO-N-CO]_n-$$

durch Schotten-Baumann-Kondensation von aliphatischen oder aromatischen Carbonsäurechloriden ClCO-B-COCl, wobei B einen aliphatischen oder aromatischen Rest bedeutet, mit phosphorhaltigen Bisphenolen HO-A-OH, wobei A einen Rest der Struktur

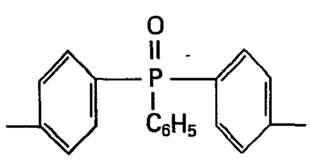

bedeutet, hergestellt. Die erhaltenen Polyarylenester neigen zum Kristallisieren, wodurch die Schmelztemperatur erhöht wird. Die Schmelztemperatur des Polyarylenesters mit dem oben beschriebenen Aufbau, wobei B para-Phenylengruppen sind, liegt bei etwa 300 °C. Dagegen liegt die Schmelztemperatur eines Co-Kondensats, bei dem etwa 30% der Gruppen A durch Reste des Bisphenols A ersetzt sind, nur bei etwa 250 °C. Diese für die Verarbeitbarkeit erwünschte, allerdings noch nicht ausreichende Verminderung der Schmelztemperatur muss mit einer Verminderung des Phosphorgehalts um 28% erkauft werden.

S. V. Vinogradova et. al. haben in Polymer-Science USSR, Band 1, Seite 125 (1960) phosphorhaltige Polyarylenpolyester beschrieben, die sich von der phosphorhaltigen Dicarbonsäure

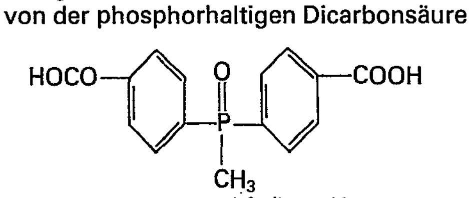

und von einem aliphatischen oder araliphatischen Diol ableiten, welches aliphatisch gebundene Hydroxylgruppen aufweist. Die Mehrzahl der beschriebenen Polykondensate hat eine sehr niedrige Schmelzviskosität und keine Kunststoffeigenschaften. Das höchste Molekulargewicht von 15600 hatte ein von

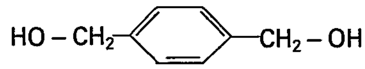

abgeleiteter Polyester. Beim Zusammensintern des pulverigen Kondensationsproduktes unter Luft bei ca. 300 °C entsteht eine leicht geschäumte, krümelige schwarze Masse ohne Festigkeit und ohne Kunststoffeigenschaften, was auf unzureichende thermische Beständigkeit des Polykondensats rückschliessen lässt.

Aus der US-A-2646420 sind Polyester bekannt, die sich von carboxy- und hydroxy-substituierten Diphenylphosphinoxiden ableiten. Für die Polykondensation werden beispielsweise die Dimethylester entsprechender Dicarbonsäuren und Dihydroxyverbindungen eingesetzt.

Die thermische Beständigkeit von phosphorhaltigen Polyarylenestern sollte in solchem Masse erhöht werden, dass sie ohne Zersetzung und wesentliche Verfärbung zu einem homogenen Material mit Kunststoffeigenschaften zusammengesintert werden können. Dieses Ziel wird erfindungsgemäss erreicht durch phosphorhaltige Polyarylenester der Struktur

$$-[CO-A-CO-O-B-O]_n-$$

worin A wenigstens zum Teil Glieder der Struktur I

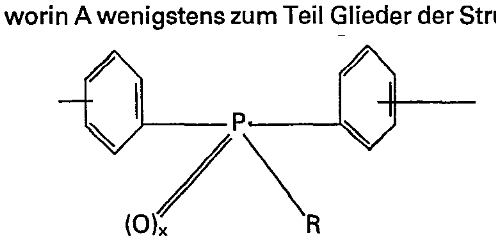

I

in der R einen niederen, gegebenenfalls chlorierten Alkylrest, einen Aryl- oder Aralkylrest, X = 0 oder 1 bedeuten und die Arylgruppen gegebenenfalls weitere Substituenten tragen können, und gegebenenfalls zum übrigen Teil Glieder der für B angegebenen Struktur sind, und worin B zweiwertige aromatische Reste der Struktur für

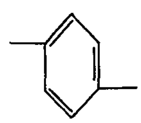

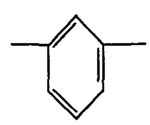

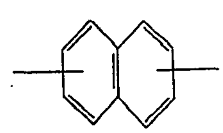

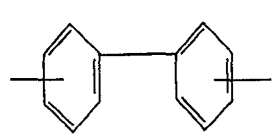

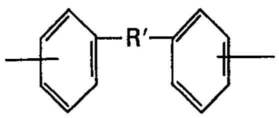

sind, worin R' ein Sauerstoffatom, ein Schwefelatom, eine Sulfonyl-, Carbonyl- oder Isopropyliden-Brückengruppe oder eine Brückengruppe der Struktur

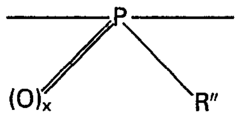

in der X = 0 oder 1 und R'' einen Phenylrest bedeutet, darstellt, und n einen Mittelwert über 10, vorzugsweise über 20, bedeutet und der Phosphorgehalt über 1 Gew.-% liegt. Die aromatischen Ringe können gegebenenfalls weitere Substituenten tragen.

Die erfindungsgemässen Polyester haben Zersetzungstemperaturen von 400 bis über 450 °C und können daher ohne Zersetzung und ohne wesentliche Dunkelfärbung zu klar durchsichtigen, kunststoffartigen Wirkstoffen zusammengesintert werden. Die Pyrolyserückstandswerte liegen deutlich höher als diejenigen von anderen phosphorhaltigen Polyarylenpolyestern. Der Pyrolyserückstandswert (CR-Wert) gilt nach D.W. van Krevelen («Properties of Polymers», Elsevier Scient. Publ. Comp., 1976, S.528–532) als ein Mass für die Selbstlöscheigenschaften, wobei zwischen dem «Oxygen Index», der die niedrigste zur Aufrechterhaltung der Verbrennung erforderliche Sauerstoffkonzentration angibt, und dem CR-Wert ein quantitativer Zusammenhang besteht. Die erfindungsgemässen Polyester haben zum Teil CR-Werte über 40, während die bekannten phosphorhaltigen Polyarylenester, die sich von aliphatischen oder araliphatischen Diolen ableiten, CR-Werte von 5 bis 30% haben. Höhere Werte, bis zu 38%, erreichen Polyesterphosphonate gemäss DE-OS 2925206, jedoch ist die P-O-C-Bindung dieser Polymeren hydrolyseanfällig.

Die neuen Polyarylenester können im thermoplastischen Zustand unterhalb ihrer thermischen Zersetzungstemperatur im Temperaturbereich von etwa 200 bis 380 °C zu Folien, Fasern, Profilen oder sonstigen Formkörpern verformt werden, die sich durch gute Selbstlöscheigenschaften auszeichnen. Sie können auch mit anderen thermoplastischen Kunststoffen, die allein nicht selbstverlöschend sind, zu selbstverlöschenden Gemischen verarbeitet werden. Während niedermolekulare Flammschutzzustände bei niedriger Dosierung keine ausreichenden Selbstlöscheigenschaften hervorrufen und bei hoher Dosierung die Kunststoffeigenschaften nachhaltig verschlechtern, üben die erfindungsgemässen Polyester, die selbst Kunststoffeigenschaften haben, einen geringeren Einfluss auf die Eigenschaften des damit abgemischten Kunststoffes aus.

Die Dicarbonsäure HOCO-A-COOH, die am Aufbau der erfindungsgemässen Polyarylenester beteiligt ist, besteht wenigstens zum Teil aus Verbindungen der Struktur

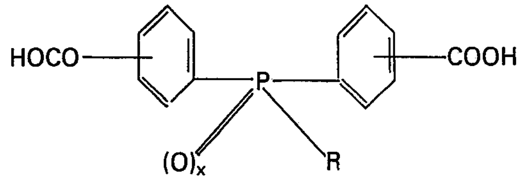

R kann z.B. eine Methyl-, Chlormethyl-, Benzyl- oder Phenylgruppe sein. Methyl und Phenyl sind bevorzugt. Die aromatischen Reste der Verbindung können gegebenenfalls weitere Substituenten, wie anellierte aromatische Ringsysteme, Methylgruppen oder Halogenatome, insbesondere Brom oder Chlor, tragen. Die Carboxylgruppen stehen vorzugsweise in p-Stellung zum Phosphoratom. Die oxydierte Form der Verbindung, für die x = 1 gilt, ist bevorzugt. Die Herstellung der Dicarbonsäuren ist durch P.W. Morgan und B.C. Herr in Journal of the American Chem. Society, Band 74 (1952), S.4526 beschrieben worden. Sie können in an sich bekannter Weise mittels Thionylchlorid in ihre Dicarbonsäuredichloride übergeführt werden.

Ein Teil der phosphorhaltigen Gruppen A kann durch die für B genannten phosphorfreien Gruppen ersetzt sein. Dadurch wird zwar der Phosphorgehalt des Polyarylenesters vermindert, aber gleichzeitig die Kristallisationsneigung herabgesetzt. Der Anteil der phosphorfreien Gruppen A und B ist dadurch begrenzt, dass der Phosphorgehalt nicht weniger als 1 Gew.-% betragen darf. Er liegt vorzugsweise über 2 Gew.-%; im Regelfall sogar über 4 und insbesondere bei 5 bis 7 Gew.-%. Vorzugsweise liegt der Anteil der phosphorhaltigen Gruppen A über 50 Mol-%, insbesondere über 70 Mol-% der Gesamtheit der Gruppen A.

Die Bisphenole HO-B-OH, die den Polyarylenestern formal zugrundeliegen und die für deren vorteilhafte Eigenschaften wesentlich sind, sind entweder über Brückenglieder R' verbundene mehrkernige aromatische Diole, oder, wenn sie nicht diesen Aufbau haben, vorzugsweise Gemische von zwei oder mehr der anderen formelmässig bezeichneten Bisphenole, wodurch die Kristallisationsneigung der Polyester gestört und die Schmelztemperatur in erwünschter Weise erniedrigt wird. Der schmelztemperatursenkende Effekt wird im allgemeinen schon mit zwei verschiedenen Säuren der zuletzt genannten Art voll erreicht. Der Effekt wird durch deutliche Strukturunterschiede zwischen den beteiligten Gruppen B gefördert. Der Anteil jeder beteiligten Art von Resten B soll vorzugsweise nicht unter 10 Mol-%, bezogen auf die Gesamtheit der Reste B, liegen. Anteile von 25 bis 75 Gew.-% sind bevorzugt, insbesondere das Verhältnis 50:50.

Die Herstellung der Polyarylenester erfolgt durch Polykondensation von difunktionellen Verbindungen unter Ausbildung von Esterbindungen und Austritt eines Nebenproduktes. Besonders zweckmässig ist die Schotten-Baumann'sche Reaktion zwischen den Bisphenolen HO-B-OH und den Dicarbonsäuredichloriden ClCO-A-COCl in Gegenwart einer wenigstens äquivalenten Menge einer Base in einem geeigneten Lösungsmittel.

Als Lösungsmittel eignen sich z.B. aliphatische Chlorkohlenwasserstoffe, wie Methylenchlorid, Chloroform, Tetrachloräthylen, Tetrachloräthan, oder aromatische Kohlenwasserstoffe, wie Toluol. Als Basen können z.B. Natrium- oder Kaliumhydroxyd, Pyridin und Triäthylamin verwendet werden. Die Reaktionstemperatur liegt beispielsweise zwischen 0 und 150 °C, vorzugsweise bei 20 bis 100 °C.

Um ein hohes Molekulargewicht und damit gute Kunststoffeigenschaften zu erreichen, werden die Ausgangsverbindungen in möglichst hoher Reinheit eingesetzt. Insbesondere sollen monofunktionelle Verunreinigungen fehlen, die an der Reaktion teilnehmen, aber kettenabbrechend wirken. Aus dem gleichen Grund muss das Molverhältnis der Bisphenole zu der Gesamtheit der Dicarbonsäurederivate sehr nahe bei 1:1 liegen, was aus der Chemie der Polykondensationsreaktionen allgemein bekannt ist. Der Polykondensationsgrad liegt über 10, vorzugsweise über 20. Das Molekulargewicht der Polyarylenester liegt vorzugsweise nicht unter 10000, vorzugsweise im Bereich von 20000 bis 80000. Um diese Molekulargewichte zu erreichen, sind Kondensationszeiten von 0,1 bis 10 Stunden erforderlich. Häufig lassen sich die Kunststoffeigenschaften, vor allem die Festigkeitswerte der Produkte, durch eine Nachkondensation von 10 bis 90 min Dauer bei 250 bis 350 °C, gegebenenfalls im Vakuum, weiter verbessern. Die entstehenden linearen Makromoleküle enthalten in der Regel Hydroxyl- bzw. Carboxylgruppen als Endgruppen, die gewünschtenfalls nachträglich veräthert bzw. verestert werden können. Man kann auch gezielt kleine Mengen monofunktioneller Phenole oder Carbonsäuren zur Bildung von Endgruppen zusetzen.

Die bevorzugten Polymermoleküle bleiben im Regelfall bei der Kondensation gelöst, während das Hydrochlorid der Base ausfällt und abfiltriert werden kann. Das Polymerisat kann z.B. durch Ausfällung mit einem Nichtlöser oder durch Verdampfen des Lösungsmittels gewonnen werden.

Weitere Möglichkeiten zur Synthese der neuen Polyarylenester sind die literaturbekannte Schmelzkondensation durch Umsetzung der entsprechenden Bisphenol-diacetate und Dicarbonsäuren oder Umsetzung der Bisphenole mit Dicarbonsäurediphenylestern. Nachteilig ist bei diesen Methoden das lange Erhitzen der Kondensationsansätze auf hohe Temperaturen, die 350 °C während 10 Stunden erreichen können, sowie die Notwendigkeit, aus den hochviskosen Reaktionsgemischen, die bei der Kondensation abgespalteten niedermolekularen Verbindungen abzudestillieren.

Die gemäss den nachfolgenden Beispielen dargestellten Polyester sind zum Teil in organischen Lösungsmitteln, wie Methylenchlorid, löslich, zum Teil wegen deutlicher Kristallisationsneigung unlöslich. Die löslichen Polyester können unmittelbar aus der Kondensationslösung mit hohem Molekulargewicht, das sich durch Nachkondensieren noch weiter steigern lässt, gewonnen werden. Aus den ausgeprägten Kunststoffeigenschaften, wie Zähigkeit, Biegsamkeit, Elastizität usw. lässt sich auf einen Polykondensationsgrad n von weit über 20 rückschliessen. Die unlöslichen, mehr oder weniger kristallinen Polyester erhalten erst durch Nachkondensieren ähnliche Kunststoffeigenschaften.

Polyester mit niedrigem Polykondensationsgrad (n = 10 bis 20) haben geringere Festigkeit und Elastizität und eignen sich vorzugsweise als Abmischkomponente mit anderen Polymeren. Unterhalb eines Polykondensationsgrades von 10 treten keine typischen Kunststoffeigenschaften mehr auf und die Kondensate können im Gemisch mit anderen Polymeren als Weichmacher wirken.

Beispiele 1–9

Jeweils 0,03 Mol Bisphenol gemäss Tabelle I und 0,09 Mol Triäthylamin wurden in 250 ml Methylenchlorid gelöst (erforderlichenfalls unter Zusatz geringer Mengen Pyridin). Zu dieser Lösung wurden bei 0–25 °C unter Rühren 0,03 Mol Dicarbonsäuredichlorid gemäss Tabelle I getropft, anschliessend 2 h bei Raumtemperatur nachgerührt. Nach Zugabe von 2 Mol-% Bisphenol (bezogen auf die ursprünglich eingesetzte Mol-Menge Bisphenol) und 10 min Nachreaktionszeit wurde die Polykondensation durch Zugabe von 5 Mol-% Acetylchlorid (bezogen auf die eingesetzte Dicarbonsäuredichlorid-Menge) abgebrochen. Durch Einrühren des Reaktionsgemisches in die 5- bis 10-fache Volumenmenge Methanol oder, falls die Fällung gequollen und klebrig ist, in wässriges Methanol mit bis zu 50% Wasser, wurde der entstandene Polyester gefällt, abgesaugt, chloridfrei gewaschen, gegebenenfalls nochmals aus Methylenchlorid/Methanol umgefällt und getrocknet. Das Molekulargewicht der so erhaltenen Polyester lässt sich, falls gewünscht, durch Nachkondensation in Substanz, z.B. während 6–180 min bei 300–350 °C weiter erhöhen.

Tabelle I
Polyester aus Bis-(p-phenylcarbonylchlorid)-phenylphosphinoxid und verschiedenen Bisphenolen

| Beispiel No. | Bisphenol HO – B – OH<br>Struktur von B: | P-Gehalt [%]<br>theor. | <br>gefunden | Glastemperatur[1)]<br>[°C] | Zersetzungstemperatur[2)]<br>beginnende Zersetzung [°C] | <br>deutliche Zersetzung [°C] | CR-Wert [%][3)] |
|---|---|---|---|---|---|---|---|
| Vergleichsbeispiel | 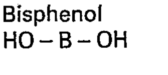 | 6,6 | 6,1 | 160 | 160 | 360 | 30 |

Tabelle I (Fortsetzung)
Polyester aus Bis-(p-phenylcarbonylchlorid)-phenylphosphinoxid und verschiedenen Bisphenolen

| Beispiel No. | Bisphenol HO – B – OH<br>Struktur von B: | P-Gehalt [%] theor. | gefunden | Glastemperatur[1] [°C] | Zersetzungstemperatur[2] beginnende Zersetzung [°C] | deutliche Zersetzung [°C] | CR-Wert [%][3] |
|---|---|---|---|---|---|---|---|
| 1 | 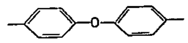 | 5,8 | 5,6 | 195 | 350 | 450 | 43,8 |
| 2 | 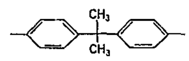 | 5,6 | 4,8 | – | 350 | 440 | 28,9 |
| 3 | 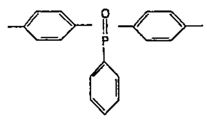 | 9,7 | 8,9 | 235 | 375 | 450 | 42,8 |
| 4 | 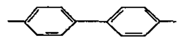 | 6,0 | 5,4 | 180 | 360 | 430 | 37,5 |
| 5 | 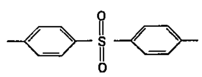 | 5,3 | 4,8 | 160 | 350 | >450 | 35,5 |

1) nach Differential Scanning Calorimetry (DSC) unter $N_2$
2) nach Thermo-Gravimetrischer Analyse (TGA) unter $N_2$
3) = Pyrolyserückstand nach 30 min bei 800 °C unter $N_2$

Tabelle II

| Ausgangsverbindungen | | | Polyestereigenschaften | | | | |
|---|---|---|---|---|---|---|---|
| Beispiel No. | Bisphenol[1] (Mol) | Dicarbonsäure-dichloride[2] (Mol) | Glastemperatur[3] [°C] | Zersetzungstemperatur[4] beginnende Zersetzung [°C] | deutliche Zersetzung [°C] | CR-Wert[5] [%] | P-Gehalt [%] |
| 6 | 0 (1) | TPPO (0,3)<br>TPS (0,7) | 110 ($T_M$=223 °C) | 325 | >450 | 35,4 | 2,4 |
| 7[6] | A (1) | TPPO (0,3)<br>TPS (0,7) | 160 | | 440 | 29,7 | 2,2 |
| 8 | 0 (1) | TPPO (0,3)<br>TPS (0,35)<br>JPS (0,35) | 150 | | >450 | 32,1 | 2,4 |
| 9 | 0 (1) | TPPO (0,3)<br>OPhS (0,7) | 115 ($T_M$=225 °C) | 390 | 460 | 39,2 | 2,1 |
| Vergleichs-versuch | 0 (1) | OPhS (0,7)<br>Phenoxa-TPPO (0,3) | 207 | 300 | 450 | 30,5 | 2,1 |
| Vergleichs-versuch | 0 (1) | TPS (0,7)<br>Phenoxa-TPPO (0,3) | 210 | 290 | 450 | 28,9 | 2,2 |

1) Bisphenol 0 = 4,4′-Dioxydiphenyläther; Bisphenol A = 4,4′-Isopropyliden-bisphenol
2) TPPO = Bis-(p-phenylencarbonylchlorid)-phenylphosphinoxid
TPS = Terephthalsäuredichlorid
JPS = Isophthalsäuredichlorid
OPhS = Oxibis-(p-phenylcarbonylchlorid)
Phenoxa-TPPO = 2,8-Dichloroformyl-10-phenylphenoxaphosphin-10-oxid
3) nach DSC unter $N_2$ (Werte in Klammern sind Schmelztemperaturen bei teilkristallinen Polyestern)
4) nach TGA unter $N_2$
5) Pyrolyserückstand nach 30 min bei 800 °C unter $N_2$
6) Mol-Gewicht: 50.100

**Patentansprüche**

1. Phosphorhaltige Polyarylenester der Struktur

$$[-CO-A-CO-O-B-O]_n-$$

worin A wenigstens zum Teil Glieder der Struktur I,

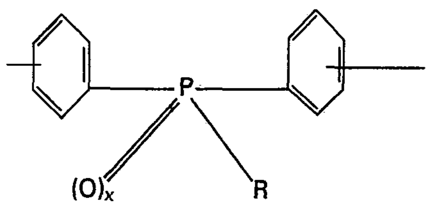

I

in der R einen niederen, gegebenenfalls chlorierten Alkylrest, einen Aryl- oder Aralkylrest, X = 0 oder 1 bedeuten und die Arylgruppen gegebenenfalls weitere Substituenten tragen können, und gegebenenfalls zum übrigen Teil Glieder der für B angegebenen Struktur sind, n einen Mittelwert über 10 bedeutet und der Phosphorgehalt über 1 Gew.-% liegt, und worin B zweiwertige aromatische Reste der Struktur

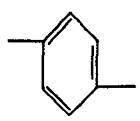

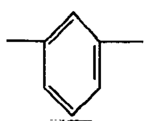

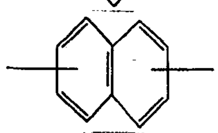

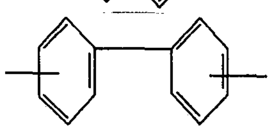

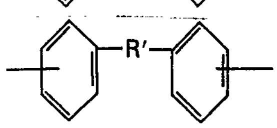

sind, worin R′ ein Sauerstoffatom, ein Schwefelatom, eine Sulfonyl-, Carbonyl- oder Isopropyliden-Brückengruppe oder eine Brückengruppe der Struktur

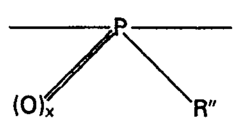

in der X = 0 oder 1 ist und R″ einen Phenylrest bedeutet, darstellt und worin die aromatischen Ringe gegebenenfalls weitere Substituenten tragen können.

2. Verfahren zur Herstellung des phosphorhaltigen Polyarylenesters gemäss Anspruch 1 durch Polykondensation von difunktionellen Verbindungen unter Bildung von Esterbindungen und Austritt eines Nebenproduktes, gekennzeichnet durch die Umsetzung

a) von Bisphenolen HO – B – OH mit Carbonsäurechloriden ClCO-A-COCl in Gegenwart einer zu den Carbonsäurechloridgruppen wenigstens äquimolaren Mengen einer Base,

b) von Bisphenolen HO – B – OH mit Diphenylestern der Dicarbonsäuren HOCO – A – COOH oder

c) von Diacetaten der Bisphenole HO – B – OH mit Dicarbonsäuren HOCO – A – COOH.

**Revendications**

1. Polyesters d'arylène phosphorés de structure

$$-[CO-A-CO-O-B-O]_n-$$

dans laquelle A est mis, au moins en partie, pour des chaînons de structure I

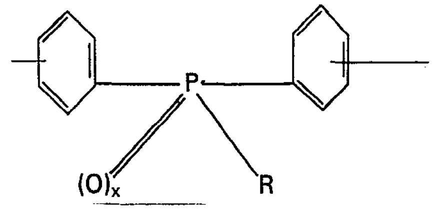

I

R représentant un radical alkyle inférieur éventuellement chloré, un radical aryle ou aralkyle, x = 0 ou 1 et les groupes aryle pouvant éventuellement porter d'autres substituants, et, le cas échéant, pour la partie restante, pour des chaînons de la structure indiquée pour B, n a une valeur moyenne supérieure à 10 et la teneur en phosphore est supérieure à 1% en poids, et dans laquelle B est mis pour des radicaux aromatiques bivalents de structure

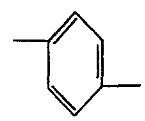

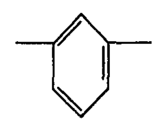

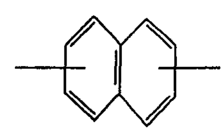

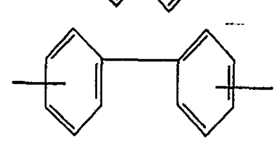

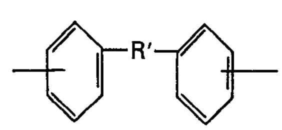

R′ étant un atome d'oxygène, un atome de soufre, un groupe pontal sulfonyle, carbonyle ou isopropylidène ou un groupe pontal de structure

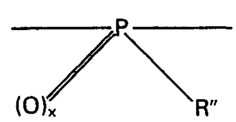

dans laquelle x = 0 ou 1 et R″ représente un radical phényle, et les noyaux aromatiques pouvant éventuellement porter d'autres substituants.

2. Procédé pour la préparation des polyesters d'arylène phosphorés selon la revendication 1 par polycondensation de composés bifonctionnels avec formation de liaisons ester et élimination d'un produit secondaire, caractérisé par la mise en réaction

a) de bisphénols HO – B – OH avec des chlorures d'acide carboxylique ClCO – A – COCl en présence d'une quantité d'une base au moins équimolaire par rapport aux groupements chlorure d'acide carboxylique,

b) de bisphénols HO – B – OH avec des esters diphényliques des acides dicarboxyliques HOCO – A – COOH ou

c) de diacétates des bisphénols HO – B – OH avec des acides dicarboxyliques HOCO – A – COOH.

**Claims**

1. Phosphorus-containing polyarylene esters of the structure

$$[-CO-A-CO-O-B-O]_n-$$

wherein A consists at least partly of components of structure I,

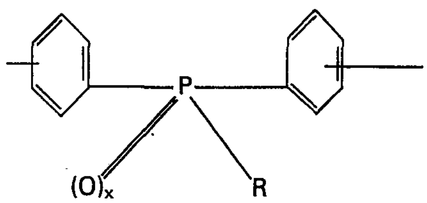

I

wherein R represents a lower, optionally chlorinated alkyl group or an aryl or aralkyl group, X = 0 or 1 and the aryl groups may optionally carry further substituents, and optionally consists for the remaining part of components having the structure given for B, n represents en average of above 10 and the phosphorus content is more than 1% by weight, and wherein B represents divalent aromatic groups of the structure

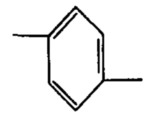

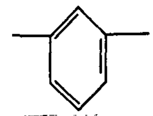

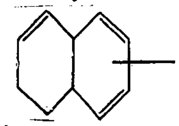

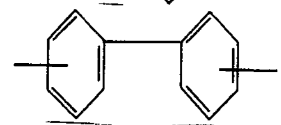

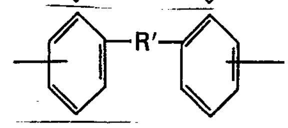

wherein R′ represents an oxygen atom, a sulphur atom, a sulphonyl, carbonyl or isopropylidene bridge group or a bridge group of the structure

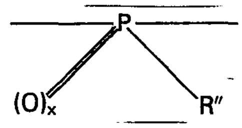

wherein X = 0 or 1 and R″ represents a phenyl group and wherein the aromatic rings may optionally carry further substituents.

2. Process for preparing the phosphorus-containing polyarylene esters as claimed in claim 1 by polycondensation of difunctional compounds, with the formation of ester bonds and the escape of a by-product, characterised by the reaction

a) of bisphenols HO – B – OH with carboxylic acid chlorides ClCO-A-COCl in the presence of a quantity of base which is at least equimolar to the carboxylic acid chloride groups,

b) of bisphenols HO – B – OH with diphenyl esters of the dicarboxylic acids HOCO – A – COOH or

c) of diacetates of bisphenols HO – B – OH with dicarboxylic acids HOCO – A – COOH.